## Europäisches Patentamt

## European Patent Office

## Office européen des brevets

(19)

(11) Veröffentlichungsnummer: **0 070 951**
**B1**

(12)

# EUROPÄISCHE PATENTSCHRIFT

(45) Veröffentlichungstag der Patentschrift:
17.04.85

(51) Int. Cl.⁴: **B 65 G 7/00**

(21) Anmeldenummer: **81710035.7**

(22) Anmeldetag: **31.07.81**

---

(54) Rollenkipper.

---

(43) Veröffentlichungstag der Anmeldung:
09.02.83 Patentblatt 83/6

(45) Bekanntmachung des Hinweises auf die Patenterteilung:
17.04.85 Patentblatt 85/16

(84) Benannte Vertragsstaaten:
CH DE FR GB IT LI NL SE

(56) Entgegenhaltungen:
US - A - 3 795 323

WOCHENBLATT FÜR PAPIERFABRIKATION, Jahrgang 107, Nr. 13/1979, Günter-Staib Verlag, Biberach an der Riss, BRD, A. SCHMIDT "Heben und Wenden von Rollen ohne Materialbeschädigung", Seiten 503-507

(73) Patentinhaber: **Bartholomy & Co., Münsterweg 24, D-5160 Düren-Birgel (DE)**

(72) Erfinder: **Schmidt, Adolf, Münsterweg 24, D-5160 Düren-Birgel (DE)**

(74) Vertreter: **Paul, Dieter-Alfred, Dipl.-Ing., Erftstrasse 82, D-4040 Neuss 1 (DE)**

---

## Beschreibung

Die Erfindung betrifft einen Rollenkipper zum Kippen von rollenförmigen Gegenständen, beispielsweise Papierrollen oder dergleichen, aus einer Lage mit horizontaler Rollenachse in eine mit vertikaler Rollenachse oder umgekehrt, mit einem aus einer Aufnahmeplatte und einer rechtwinklig dazu angesetzten Abgabeplatte bestehenden Kipprahmen, der um eine im Bereich der Verbindung von Aufnahme- und Abgabeplatte liegenden Schwenkachse mittels zumindest eines ein Kippmoment erzeugenden Haupthydraulikzylinders verschwenkbar ist.

Rollenkipper dienen dazu, rollenförmige Gegenstände wie insbesondere Papierrollen aus einer horizontalen in eine vertikale Lage oder umgekehrt zu kippen. Hierzu weisen sie einen Kipprahmen mit einer meist prismenförmigen Aufnahmeplatte, auch Horizontalplatte genannt, und eine daran senkrecht angesetzte Abgabeplatte bzw. Vertikalplatte auf. Die zu kippende Rolle wird auf die Aufnahmeplatte abgelegt, und dann der gesamte Kipprahmen um 90° C gedreht, so daß die Rolle dann senkrecht auf der Abgabeplatte zu stehen kommt und von dieser wegtransportiert werden kann.

In vielen Fällen ist es erwünscht, daß die Aufnahmeplatte vor dem Kippen und die Abgabeplatte nach dem Kippen möglichst auf einer Höhe mit dem Boden liegen, auf dem der Rollenkipper angeordnet ist. Dies erleichtert nämlich das Ablegen der Rolle auf der Aufnahmeplatte bzw. den anschließenden Abtransport von der Abgabeplatte. Anfahrrampen, die wegen der nur geringen zulässigen Steigung ansonsten sehr lang sein müßten und deshalb sehr viel Platz beanspruchen würden und eine Unfallgefahr darstellen, können sich dann nämlich erübrigen.

Um derart niedrige Aufnahme- bzw. Abgabeplatten zu verwirklichen, werden die Tragkonstruktion und die hydromechanische Kippeinrichtung in Gruben angeordnet (vgl. A. Schmidt, Heben und Wenden von Rollen ohne Materialbeschädigung in »Wochenblatt für Papierfabrikation« Jahrgang 107, Nr. 13, 1979, Seiten 503 bis 507, Abb. 12). Dies ist eine relativ aufwendige Bauweise und erfordert auch erhebliche Sicherungsmaßnahmen. Keinesfalls ist es möglich, einen solchen Rollenkipper in eine vorhandene Decke einzubauen.

Der Erfindung liegt die Aufgabe zugrunde, einen Rollenkipper derart zu gestalten, daß eine möglichst niedrige Aufnahmeplatte bzw. nach dem Kippen eine entsprechend niedrige Abgabeplatte ohne Grubeneinbau verwirklicht wird.

Diese Aufgabe wird erfindungsgemäß dadurch gelöst, daß zusätzlich zumindest ein Zusatzhydraulikzylinder zur Erzeugung eines dem Kippmoment entgegengesetzten, jedoch niedrigeren Gegendrehmoment vorgesehen ist, wobei Kraftrichtung und -betrag des Zusatzhydraulikzylinders derart ausgelegt sind, daß die auf die Schwenkachse wirkenden Horizontalkräfte vermindert, vorzugsweise eliminiert werden. Dieser Lösung der gestellten Aufgabe liegt die schon zur Erfindung gehörende Erkenntnis zugrunde, daß auf die Schwenkachse der vorbekannten Rollenkipper nicht nur Vertikalkräfte aufgrund des Gewichtes von Kipprahmen und Last wirken, sondern durch die Betätigung des Haupthydraulikzylinders auch Horizonalkräfte insbesondere bei Beschleunigung und Verzögerung des Kipprahmens entstehen. Aufgrund dessen müssen die Schwenkachse und deren Lager sehr kräftig ausgebildet werden, was bisher eine möglichst niedrige Anordnung von Aufnahme- bzw. Abgabeplatte verhinderte. Durch die Anordnung des Zusatzhydraulikzylinders nach der vorliegenden Erfindung werden die Horizontalkräfte in der bevorzugten Ausführungsform völlig kompensiert, so daß der Kipprahmen nur noch von unten abgestützt zu werden braucht. Dies läßt eine außerordentlich niedrige Anordnung von Aufnahme- bzw. Abgabeplatte zu, so daß der erfindungsgemäße Rollenkipper auch auf Decken, die ein Ausheben von Gruben nicht zulassen, platzsparend angeordnet werden kann.

Selbstverständlich muß die Differenz zwischen dem Kippmoment und dem Gegendrehmoment noch so groß sein, daß ein Kippen des Kipprahmens mit der Last möglich ist. Dem kann durch entsprechende Erhöhung des Kippmomentes Rechnung getragen werden. Diese Erhöhung kann relativ gering gehalten werden, wenn der Zusatzhydraulikzylinder derart am Kipprahmen angreift, daß der zur Erzeugung des Gegendrehmomentes wirksame Hebelarm in bezug auf die Schwenkachse möglichst klein ist. Entsprechend klein ist nämlich dann auch das Gegendrehmoment, ohne daß hierdurch die Kompensation der Horizontalkräfte beeinträchtigt wird.

Nach der Erfindung ist ferner vorgesehen, daß die Hydraulikzylinder parallel zueinander, vorzugsweise im wesentlichen horizontal angeordnet sind, wobei der Zusatzhydraulikzylinder an einem kürzeren Hebelarm in bezug auf die Schwenkachse angreift als der Haupthydraulikzylinder. Diese Anordnung macht die Auslegung der Kolbenflächen relativ einfach und ermöglicht es dann, daß die jeweils in entgegengesetzter Richtung wirkenden Druckräume von Haupt- und Zusatzhydraulikzylinder miteinander verbunden sind.

Als besonders platzsparend hat sich ein offenes Schneidenlager für den Kipprahmen erwiesen, in dem die von Aufnahme- und Abgabeplatte gebildete äußere Kante gelagert ist.

Gemäß einem weiteren Merkmal der Erfindung ist vorgeschlagen, daß oberhalb der Ebene der Aufnahmeplatte zumindest eine Kulissenführung vorgesehen ist, die einen kreisbogenförmigen Schlitz mit von der Schwenkachse ausgehendem Radius aufweist, in die ein am Kipprahmen befestigtes Führungselement einfaßt. Diese Kulissenführung wirkt bei der Ablage einer Rolle auf der Aufnahmeplatte und beim Kippvorgang unterstützend. Zweckmäßigerweise sollte dabei das Führungselement gleichzeitig der Angriffspunkt des Zusatzhydraulikzylinders sein. Als Führungselement kommen insbesondere Führungsrollen in Frage.

Bei Verwendung der vorbeschriebenen Kulissenführung kann eine zusätzliche Lagerung auch vollständig entfallen, sofern eine entsprechende Dimensionierung der Kulissenführung vorgenommen wird. Es sind dann überhaupt keine Einbauten mehr in den Boden erforderlich. Des weiteren eröffnet sich hierdurch die Möglichkeit, die Kulissenführung sowie Haupt- und Zusatzhydraulikzylinder auf einem in Längsrichtung des Kipprahmens bewegbaren Schlitten zu befestigen, die beim Kippvorgang gegen die Kipprichtung verschiebbar ist. Durch das Kippen entsteht also kein zusätzlicher Platzbedarf, da der Kipprahmen in den Bereich der Aufnahmeplatte in liegendem Zustand versetzt wird. Für die Verschiebung des Schlittens ist dabei zweckmäßigerweise ein Hydraulikzylinder vorgesehen.

In der Zeichnung ist die Erfindung an Hand von zwei Ausführungsbeispielen näher veranschaulicht. Es zeigt

Fig. 1 einen Rollenkipper in einer Seitenansicht mit vergrößerter Hydromechanik,

Fig. 2 den Rollenkipper nach Fig. 1 in der Draufsicht,

Fig. 3 einen anderen Rollenkipper in der Seitenrichtung mit vergrößerter Hydromechanik und

Fig. 4 eine Draufsicht auf den Rollenkipper nach Fig. 3 in um 90° C gdrehter Stellung.

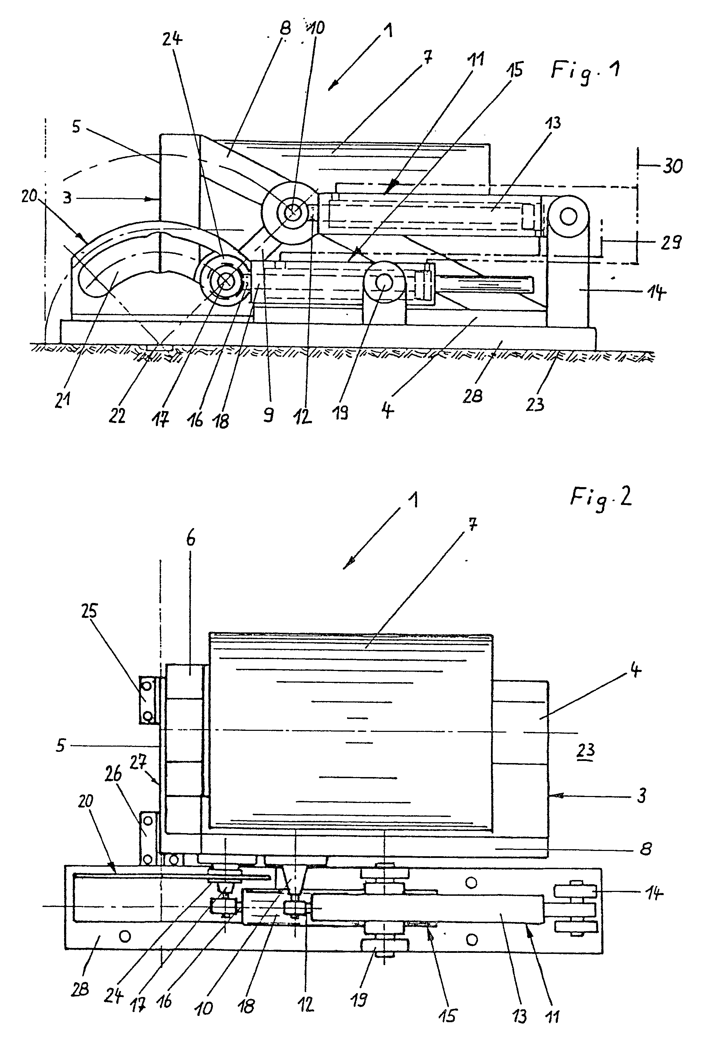

Die Fig. 1 und 2 zeigen zwei Rollenkipper 1, 2, die in vielen Merkmalen praktisch identisch sind, weshalb zunächst eine gemeinsame Beschreibung erfolgt.

Die Rollenkipper 1, 2 weisen je einen Kipprahmen 3 auf, der aus einer Aufnahmeplatte 4 und einer senkrecht daran angesetzten Abgabeplatte 5 besteht, auf der eine Palette 6 angeordnet ist. Auf der Aufnahmeplatte 4 ist eine Papierrolle 7 abgelegt.

Auf einer Seite des Kipprahmens 3 ist ein diagonal verlaufender Versteifungsträger 8 vorgesehen, der das obere Ende der Abgabeplatte 5 und das freie Ende der Aufnahmeplatte 4 verbindet. Im Winkel von etwa 45° verläuft ein weiterer Versteifungsträger 9, der von der Verbindung von Abgabe- und Aufnahmeplatte 4, 5 zu dem ersten Versteifungsträger 8 geht.

Am oberen Ende des Versteifungsträgers 9 ist über einen Gelenkzapfen 10 ein Haupthydraulikzylinder 11 angelenkt, und zwar mit seiner Kolbenstange 12. Sein Zylinder 13 ist endseitig an einem Ständer 14 gelenkig befestigt. Unterhalb des Haupthydraulikzylinders 11 und parallel zu diesem ist ein Zusatzhydraulikzylinder 15 angeordnet, dessen — im übrigen durchgehende — Kolbenstange 16 ebenfalls über einen Gelenkzapfen 17 an dem Versteifungsträger 9 angelenkt ist. Sein Zylinder 18 ist in einem Gabellager 19 gelagert.

Der Gelenkzapfen 17 ist in einer Kulissenführung 20 geführt, die zwischen dem Kipprahmen 3 und der Anlenkung des Zusatzhydraulikzylinders 15 angeordnet ist. Die Kulissenführung 20 weist einen kreisbogenförmigen Führungsschlitz 21 auf, dessen Radius von einem Punkt 22 im Bereich des Bodens 23 ausgeht. Auf dem Gelenkzapfen 17 ist eine Führungsrolle 24 gelagert, die in den Führungsschlitz 21 einfaßt und auf dessen Kanten sie abrollen kann.

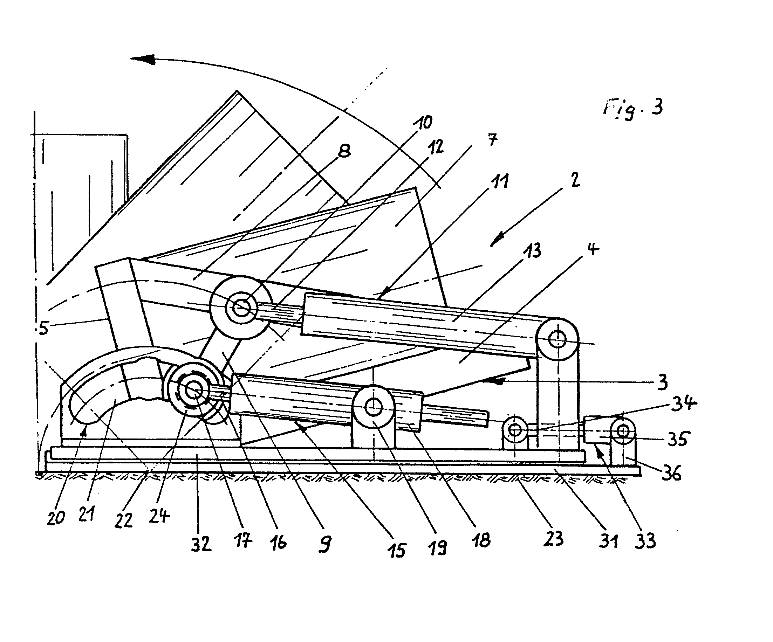

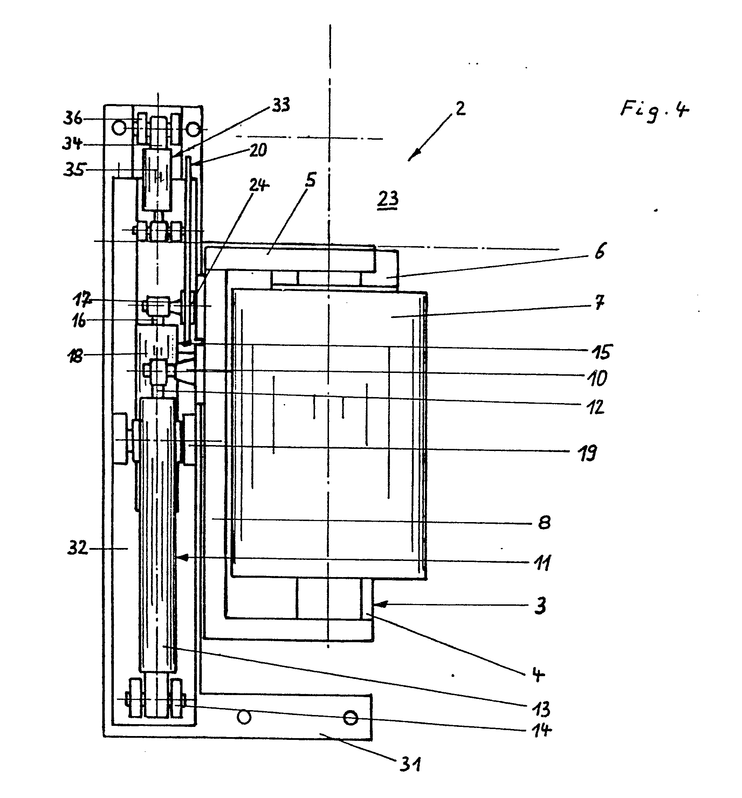

Die Unterschiede zwischen den in den Fig. 1 und 2 und den in den Fig. 3 und 4 gezeigten Rollenkippern 1, 2 besteht in folgenden Merkmalen.

Bei dem in den Fig. 1 und 2 dargestellten Rollenkipper 1 wird der Kipprahmen 3 in zwei einfachen Schneidenlagern 25, 26 abgestützt. Hierzu kann in bekanner Weise an der von Aufnahme- und Abgabeplatte 4, 5 gebildeten Außenkante 27 eine passende, halbrunde Leiste angesetzt werden, die in entsprechenden Vertiefungen in den Schneidenlagern 25, 26 einfassen.

Der Ständer 14 und das Gabellager 19 sind ebenso wie die Kulissenführung 20 auf einer fest mit dem Boden 23 verbundenen Grundplatte 28 befestigt. Die Druckräume von Haupt- und Zusatzhydraulikzylinder 11, 15 werden über die strichpunktierten Hydraulikleitungen versorgt, und zwar so, daß sie einander gegensätzlich wirken. So werden beim Kippen des Kipprahmens 3 gleichzeitig der in dieser Ansicht rechte Druckraum des Haupthydraulikzylinders 11 und der linke Druckraum des Zusatzhydraulikzylinders 15 über die Hydraulikleitung 29 beaufschlagt. Hierdurch erzeugt der Haupthydraulikzylinder 11 ein Drehmoment in Kipprichtung und der Zusatzhydraulikzylinder 15 ein entgegengesetztes Drehmoment. Obwohl die dabei entwickelten Kräfte aufgrund gleicher Kolbenflächen in Haupthydraulikzylinder 11 und Zusatzhydraulikzylinder 15 nach dem Betrag identisch sind, ist das von dem Zusatzhydraulikzylinder 15 erzeugte Drehmoment wegen des wesentlich kürzeren wirksamen Hebelarmes entsprechend kleiner als das von dem Haupthydraulikzylinder 11 bewirkte Drehmoment. Die Differenz zwischen beiden Drehmomentwerten reicht für das Kippen der Papierrolle 7 voll aus.

Die Richtung der vom Betrag her gleichen Kräfte ist wegen der Parallelität von Haupthydraulikzylinder 11 und Zusatzhydraulikzylinder 15 genau entgegengesetzt. Sie heben sich deshalb, was ihre Horizontalkomponenten und damit ihre Wirkung auf die Schneidenlager 25, 26 angeht, genau auf, so daß die Schneidenlager 25, 26 derartige Kräfte nicht aufnehmen müssen. Diese Kompensation macht erst die einfache und platzsparende Abstützung durch die Schneidenlager 25, 26 und damit eine außerordentlich niedrige Anordnung der Aufnahmeplatte 4 bzw. nach dem Kippen der Abgabeplatte 5 möglich.

Beim Zurückkippen des Kipprahmens 3 werden der in dieser Ansicht linke Druckraum des Haupthydraulikzylinders 11 und der rechte Druckraum des Zusatzhydraulikzylinders 15 über die Hydraulikleitung 30 gemeinsam beaufschlagt. Die dabei erzeugten Drehmomente kehren sich dann um, wobei selbstverständlich ihre Gegensätzlichkeit erhalten bleibt. Aus den oben beschriebenen Gründen wird deshalb auch bei dem Rückkippvorgang eine vollständige Kompensation der Horizontalkräfte erzielt.

Die Kulissenführung 20 ist an sich bei dieser Ausführungsform nicht unbedingt erforderlich, wirkt jedoch bei Ablage der Papierrolle 7 und bei den Kippvorgängen unterstützend.

Der in den Fig. 3 und 4 dargestellte Rollenkipper 2 unterscheidet sich von dem in den Fig. 1 und 2 gezeigten Rollenkipper 1 zum einen dadurch, daß der Kipprahmen 3 nicht in einem Lager abgestützt ist. Er wird nämlich allein von der Kulissenführung 20 geführt, so daß der Kippvorgang »schwebend« ohne Berührung des Kipprahmens 3 mit dem Boden 23 vor sich geht. Er ist in Fig. 3 durch Darstellung der Papierrolle 7 in mehreren Winkelstellungen angedeutet.

Die Steuerung von Haupthydraulikzylinder 11 und Zusatzhydraulikzylinder 15 ist mit der Ausführungsform nach den Fig. 1 und 2 identisch, so daß auf die dortige Beschreibung Bezug genommen wird. Während des Kippvorganges durchfährt die Führungsrolle 24 den Führungsschlitz 21, so daß der Schwenkverlauf im Prinzip der gleiche ist wie bei dem Rollenkipper 1 nach den Fig. 1 und 2.

Ein weiterer Unterschied besteht darin, daß die Kulissenführung 20, das Gabellager 19 und der Ständer 14 nicht auf der Bodenplatte 31, sondern auf einem Schlitten 32 befestigt sind, der auf der Bodenplatte 30 über eine Schwalbenschwanzführung in Längsrichtung verschiebbar ist. Für die Verschiebung ist ein Hilfshydraulikzylinder 33 vorgesehen, dessen Kolbenstange 34 an dem Schlitten 31 und dessen Zylinder 35 an einem auf der Bodenplatte 30 befestigten Hilfsständer 36 angelenkt sind. Zwischen der Darstellung in der Fig. 3 und der in Fig. 4 besteht dabei insoweit ein Unterschied, als der Hilfshydraulikzylinder 33 in Fig. 3 an dem von der Kulissenführung 20 entfernten Ende des Schlittens 32 und in der Fig. 4 an dem der Kulissenführung 20 benachbarten Ende des Schlittens 32 angeordnet ist. Für die Funktion ist dieser Wechsel jedoch ohne Bedeutung.

Mittels des Hilfshydraulikzylinders 33 werden alle auf dem Schlitten 32 befindlichen Teile, insbesondere aber der Kipprahmen 3 beim Kippvorgang in Richtung auf den Bereich der Aufnahmeplatte 4 im liegenden Zustand gezogen bzw. gedrückt, d. h. in der Ansicht gemäß Fig. 3 nach rechts. Hierdurch entsteht beim Kippvorgang kein zusätzlicher Platzbedarf, was vor allem bei beengten Verhältnissen von Vorteil ist.

**Patentansprüche**

1. Rollenkipper (1, 2) zum Kippen von rollenförmigen Gegenständen (7), beispielsweise Papierrollen oder dergleichen, aus einer Lage mit horizontaler Rollenachse in eine mit vertikaler Rollenachse oder umgekehrt, mit einem aus einer Aufnahmeplatte (4) und einer rechtwinklig dazu angesetzten Abgabeplatte (5) bestehenden Kipprahmen (3), der um eine im Bereich der Verbindung von Aufnahme- und Abgabeplatte liegenden Schwenkachse mittels zumindest eines ein Kippmoment erzeugenden Haupthydraulikzylinders (11) verschwenkbar ist, dadurch gekennzeichnet, daß zumindest ein Zusatzhydraulikzylinder (15) zur Erzeugung eines dem Kippmoment entgegengesetzten, jedoch niedrigeren Gegendrehmoment vorgesehen ist, wobei Kraftrichtung und -betrag des Zusatzhydraulikzylinder, (15) derart ausgelegt sind, daß die auf die Schwenkachse (22) wirkenden Horizontalkräfte vermindert, vorzugsweise eliminiert werden.

2. Rollenkipper nach Anspruch 1, dadurch gekennzeichnet, daß der Zusatzhydraulikzylinder (15) derart am Kipprahmen (3) angreift, daß der zur Erzeugung des Gegendrehmomentes wirksame Hebelarm in bezug auf die Schwenkachse (22) möglichst klein ist.

3. Rollenkipper nach Anspruch 2, dadurch gekennzeichnet, daß die Hydraulikzylinder (11, 15) parallel zueinander, vorzugsweise im wesentlichen horizontal angeordnet sind, wobei der Zusatzhydraulikzylinder (15) an einem kürzeren Hebelarm in bezug auf die Schwenkachse (22) angreift als der Haupthydraulikzylinder (11).

4. Rollenkipper nach einem der Ansprüche 1 bis 3, dadurch gekennzeichnet, daß die jeweils in entgegengesetzter Richtung wirkenden Druckräume von Haupt- und Zusatzhydraulikzylinder (11, 15) miteinander verbunden sind.

5. Rollenkipper nach einem der Ansprüche 1 bis 4, dadurch gekennzeichnet, daß die von Aufnahme- und Abgabeplatte (4, 5) gebildete äußere Kante (27) in einem offenen Schneidenlager (25, 26) gelagert ist.

6. Rollenkipper nach einem der Ansprüche 1 bis 5, dadurch gekennzeichnet, daß oberhalb der Ebene der Aufnahmeplatte (4) zumindest eine Kulissenführung (20) vorgesehen ist, die einen kreisbogenförmigen Schlitz (21) mit von der Schwenkachse (22) ausgehendem Radius aufweist, in die ein am Kipprahmen (3) befestigtes Führungselement (24) einfaßt.

7. Rollenkipper nach Anspruch 6, dadurch gekennzeichnet, daß das Führungselement (24) gleichzeitig der Angriffspunkt des Zusatzhydraulikzylinders (15) ist.

8. Rollenkipper nach Anspruch 6 oder 7, dadurch gekennzeichnet, daß der Kipprahmen (3) allein in der Kulissenführung (20) gelagert ist.

9. Rollenkipper nach Anspruch 8, dadurch gekennzeichnet, daß die Kulissenführung (20) sowie Haupt- und Zusatzhydraulikzylinder (11, 15) auf einem in Längsrichtung des Kipprahmens (3) bewegbaren Schlitten (32) befestigt sind, der beim Kippvorgang gegen die Kipprichtung verschiebbar ist.

10. Rollenkipper nach Anspruch 9, dadurch gekennzeichnet, daß für die Verschiebung des Schlittens (32) ein Hydraulikzylinder (33) vorgesehen ist.

## Claims

1. Roll tipper (1, 2) for the tipping-over of roll-shaped articles (7), for example rolls of paper or the like, from a position wherein the roll axis is horizontal to a position with the roll axis vertical, or vice versa, with a tipping frame (3) which comprises a reception plate (4) and a delivery plate (5) attached to the said reception plate at right angles thereto and which is pivotable, about an axis of pivoting situated in the region of the connection between reception plate and delivery plate, by means of at least one main hydraulic cylinder (11) producing a tipping moment, characterised in that at least one additional hydraulic cylinder (15) is provided for producing an opposing torque which is in the opposite direction to the tipping moment but is not as great, and the direction and amount of the force produced by the additional hydraulic cylinder (15) are so designed that the horizontal forces acting on the pivoting axis (22) are reduced, preferably eliminated.

2. Roll tipper according to claim 1, characterised in that the additional hydraulic cylinder (15) acts on the tipping frame (3) in such a manner that the lever arm effective for producing the opposing torque, in relation to the pivoting axis (22), is as small as possible.

3. Roll tipper according to claim 2, characterised in that the hydraulic cylinders (11, 15) are arranged parallel to one another, preferably substantially horizontally, and the additional hydraulic cylinder (15) acts on a shorter lever arm in relation to the pivoting axis (22) than the main hydraulic cylinder (11) does.

4. Roll tipper according to one of claims 1 to 3, characterised in that the pressure chambers of the main and additional hydraulic cylinders (11, 15) which act in opposite directions to each other are connected to one another.

5. Roll tipper according to one of claims 1 to 4, characterised in that the external edge (27) formed by the reception plate (4) and delivery plate (5) is mounted in an open knife-edge bearing (25, 26).

6. Roll tipper according to one of claims 1 to 5, characterised in that above the plane of the reception plate (4) there is provided at least one slotted guide (20) which has an arcuate slot (21) with a radius starting from the pivoting axis (22), into which a guide element (24) secured on the tipping frame (3) engages.

7. Roll tipper according to claim 6, characterised in that the guide element (24) is at the same time the point at which the additional hydraulic cylinder (15) acts.

8. Roll tipper according to claim 6 or 7, characterised in that the tipping frame (3) is mounted in the slotted guide (20) alone.

9. Roll tipper according to claim 8, characterised in that the slotted guide (20) and also the main and additional hydraulic cylinders (11, 15) are secured on a carriage (32) which is movable in the longitudinal direction of the tipping frame (3) and which is displaceable oppositely to the tipping direction at the time of a tipping operation.

10. Roll tipper according to claim 9, characterised in that a hydraulic cylinder (33) is provided for the displacement of the carriage (32).

## Revendications

1. Basculeur de rouleaux (1, 2) pour basculer des objets en forme de rouleau (7), par exemple des bobines de papier ou analogues, d'une position où l'axe du rouleau est horizontal à une position où l'axe du rouleau est vertical, ou inversement, comprenant un cadre basculant (3), formé d'un plateau récepteur (4) et d'un plateau déchargeur (5) rapporté à angle droit au plateau récepteur, qui peut être basculé autour d'un axe de basculement situé dans la région de liaison entre plateau récepteur et plateau déchargeur, par au moins un vérin hydraulique principal (11) produisant un couple de basculement, caractérisé en ce qu'il comprend au moins un vérin hydraulique supplémentaire (15) pour produire un couple antagoniste contraire au couple de basculement mais inférieur à celui-ci, la direction et la grandeur de la force du vérin hydraulique supplémentaire (15) étant fixées de manière que les forces horizontales agissant sur l'axe de basculement (22) soient diminuées, de préférence éliminées.

2. Basculeur selon la revendication 1, caractérisé en ce que le vérin hydraulique supplémentaire (15) attaque le cadre basculant (3) de manière que le bras de levier effectif pour la production du couple antagoniste, par rapport à l'axe de basculement (22), soit aussi petit que possible.

3. Basculeur selon la revendication 2, caractérisé en ce que les vérins hydrauliques (11, 15) sont disposés parallèlement, de préférence essentiellement horizontalement, le vérin hydraulique supplémentaire (15) attaquant un bras de levier plus court, par rapport à l'axe de basculement (22), que le vérin hydraulique principal (11).

4. Basculeur selon une des revendications 1 à 3, caractérisé en ce que les chambres de pression agissant chaque fois en direction contraire des vérins hydrauliques principal et supplémentaire (11, 15) sont reliées l'une à l'autre.

5. Basculeur selon une des revendications 1 à 4, caractérisé en ce que l'arête extérieure (27) formée par les plateaux récepteur et déchargeur (4, 5) est appuyée dans un support à couteau ouvert (25, 26).

6. Basculeur selon une des revendications 1 à 5, caractérisé en ce qu'au moins un guide à coulisse (20) est prévu au-dessus du plan du plateau récepteur (4) et est pourvu d'une fente (21) en arc de cercle dont le centre est situé sur l'axe de basculement (22) et dans laquelle se déplace un élément de guidage (24) solidaire du cadre basculant (3).

7. Basculeur selon la revendication 6, caractérisé en ce que l'élément de guidage (24) constitue en même temps le point d'attaque du vérin hydraulique supplémentaire (15).

8. Basculeur selon la revendication 6 ou 7, caractérisé en ce que le cadre basculant (3) est appuyé uniquement dans le guide à coulisse (20).

9. Basculeur selon la revendication 8, caractérisé en ce que le guide à coulisse (20), de même que les vérins hydrauliques principal et supplémentaire (11, 15) sont fixés sur un coulisseau (32) mobile dans le sens de la longueur du cadre basculant (3) et qui est déplaçable lors du basculement en sens contraire à ce basculement.

10. Basculeur selon la revendication 9, caractérisé en ce qu'un vérin hydraulique (33) est prévu pour déplacer le coulisseau (32).

0 070 951

Fig. 1

Fig. 2

7

Fig. 3

Fig. 4